# EUROPÄISCHE PATENTSCHRIFT

(11) **EP 3 070 384 B1**
(45) Veröffentlichungstag und Bekanntmachung des Hinweises auf die Patenterteilung: **28.11.2018**
(21) Anmeldenummer: 16160350.1
(22) Anmeldetag: 15.03.2016
(51) Int. Cl.: F16K 1/38, F16K 41/10

(54) **VENTIL**
VALVE
SOUPAPE

(30) Priorität: 20.03.2015 DE 102015205126
(43) Veröffentlichungstag der Anmeldung: 21.09.2016
(73) Patentinhaber: GEMÜ Gebr. Müller Apparatebau GmbH & Co. Kommanditgesellschaft, 74653 Ingelfingen (DE)
(72) Erfinder: BAUMGÄRTNER, Michael, 74677 Dörzbach (DE); HAIDT, Harald, 74613 Öhringen (DE); ZUBER, Daniel, 74189 Weinsberg (DE)
(74) Vertreter: DREISS Patentanwälte PartG mbB

(56) Entgegenhaltungen:
- WO-A1-2008/101274
- DE-A1- 19 737 516
- DE-C- 832 822
- US-A- 2 826 215
- US-A1- 2004 149 947
- US-A1- 2005 001 196
- US-A1- 2006 254 651
- US-A1- 2008 110 506
- US-A1- 2008 149 874

## Beschreibung

Die Erfindung betrifft ein Ventil nach dem Oberbegriff des Anspruchs 1.

Aus der EP 2 833 043 A1 ist ein Ventil bekannt, dessen Ventilelement einstückig mit einem Kunststoff-Membranelement ausgebildet ist. Ferner offenbart die DE 10 2012 211 926 A1 ein Ventil mit einem stabförmigen Ventilelement, welches in der axialen Mitte einen Dichtabschnitt aufweist und welches gegenüber einem einlassseitigen Gehäuseabschnitt und gegenüber einem auslassseitigen Gehäuseabschnitt jeweils durch einen Faltenbalg abgedichtet ist. Die US 2004/0149947 A1 offenbart ein Ventil mit einem Ventilelement, welches mittels zwei Faltenbälgen abgedichtet ist. Die US 2006/0254651 A1 beschreibt ebenfalls ein Ventil, dessen Ventilelement ebenfalls mittels zwei Faltenbälgen abgedichtet ist. Die US 2 826 215 A betrifft ein Ventil, dessen Ventilelement mittels zweier flacher Membranen gegenüber dem Gehäuse abgedichtet ist. Aus der US 2005/0001196 A1 ist eine Dichtung für einen Ventilkörper bekannt, welche als Faltenbalg ausgeführt ist. Die WO 2008/101274 A1 beschreibt ein Sitzventil mit einem O-Ring zur Abdichtung des Ventilelements gegenüber einem Ventilsitz. Die DE 832 822 C beschreibt ein Ventil, dessen Ventilelement von zwei Tellerfedern beaufschlagt wird. In der US 2008/0110506 A1 wird ein Ventil beschrieben, bei dem zur Abdichtung ein Faltenbalg und zwei Membranen zum Einsatz kommen. Ferner wird noch die DE 197 37 516 A1 genannt, welche ein Membranventil offenbart, sowie die US 2008/0149874 A1, welche die Vorteile von konkav ausgebildeten Stützflächen beschreibt.

Die vorliegende Erfindung hat die Aufgabe ein Ventil zu schaffen, welches insbesondere in prozesstechnischen Anlagen der Lebensmittelindustrie zuverlässig und lange eingesetzt werden kann.

Diese Aufgabe wird durch ein Ventil mit den Merkmalen des Anspruchs 1 gelöst. Vorteilhafte Weiterbildungen der Erfindung sind in Unteransprüchen angegeben. Darüber hinaus finden sich wesentliche Merkmale der vorliegenden Erfindung auch in der nachfolgenden Beschreibung und in der Zeichnung. Dabei können die dort gezeigten Merkmale sowohl in Alleinstellung als auch in ganz unterschiedlichen Kombinationen für die Erfindung wichtig sein, ohne dass hierauf im Einzelnen hingewiesen wird.

Bei dem erfindungsgemäßen Ventil erfolgt die Abdichtung des Ventilelements gegenüber dem Gehäuse über zwei faltenfreie Kunststoff-Membranelemente. Hierdurch werden die beispielsweise bei Faltenbälgen vorhandenen Toträume eliminiert. Somit wird das Risiko eliminiert, dass bei einem Reinigungsvorgang Reste des Fluidstoffes in derartigen Toträumen verbleiben und nicht ausgespült werden. Es wird also verhindert, dass sich im Bereich der Abdichtungen Partikel festsetzen. Durch die Erfindung wird also letztlich die Reinheit des Verarbeitungsprozesses signifikant verbessert, es kann eine immer und jederzeit aseptische Abdichtung realisiert werden.

Darüber hinaus wird durch die Erfindung der KV-Wert, welcher den Durchfluss beschreibt und damit den Strömungswiderstand durch das Ventil hindurch charakterisiert, deutlich erhöht, da das erfindungsgemäße Ventil in geöffnetem Zustand aufgrund der glatteren Flächen dem durchströmenden Fluid einen deutlich geringeren Widerstand entgegenbringt. Damit wird die Prozesseffizienz verbessert.

Ferner wird durch den Einsatz eines Kunststoff-Membranelements die Lebensdauer der Abdichtung deutlich verbessert, da die insbesondere bei Faltenbälgen wegen der in den Falten starken Krümmungen vorhandene Gefahr von Ermüdungsbrüchen eliminiert oder zumindest deutlich reduziert wird.

Erfindungsgemäß weist das Gehäuse einen Stützring auf, der eine radial einwärtige und zum jeweiligen Kunststoff-Membranelement hin weisende Stützfläche auf, die konkav ausgebildet ist und an der ein Membranabschnitt eines Kunststoff-Membranelements bereichsweise dann in Anlage kommt, wenn sich das Ventilelement in einer zu dem jeweiligen Stützring hin weisenden Endlage befindet. Ein solcher Stützring stützt das Kunststoff-Membranelement in einer Endlage des Ventilelements ab und reduziert somit die auf das Kunststoff-Membranelement wirkende Belastung, was zu einer Verlängerung der Lebensdauer des Kunststoff-Membranelements führt.

Zu der Erfindung gehört auch, dass mindestens eines der Kunststoff-Membranelemente an mindestens einem Randbereich eine umlaufende einstückig angeformte Materialverdickung aufweist, die eine Ausformung aufweist, welche komplementär ist zu einem Bereich eines O-Dichtrings. Der O-Dichtring kann je nach Anwendung aus verschiedenen Materialien gefertigt werden, beispielsweise aus einem Elastomer-PTFE-Verbund. Sie ist nach den sogenannten "Aseptik-Richtlinien" ausgelegt. Auch dies dient dazu, dass Kunststoff-Membranelement auf einfache Art und Weise fluiddicht insbesondere am Ventilelement zu befestigen. Grundsätzlich ist es aber auch möglich, dass Kunststoff-Membranelement unmittelbar, also ohne Einsatz eines O-Dichtrings, fluiddicht mit dem Ventilelement zu verbinden.

Zu der Erfindung gehört ferner, dass das Ventil eine Vorspanneinrichtung umfasst, welche zwischen dem Stützring und einem ersten Gehäuseabschnitt angeordnet ist und welche eine Klemmkraft erzeugt, durch die ein Klemmabschnitt des zu dem Stützring benachbarten Kunststoff-Membranelements zwischen dem Stützring und einem zweiten Gehäuseabschnitt verklemmt wird. Insbesondere kommt als Vorspanneinrichtung eine Tellerfeder infrage, jedoch grundsätzlich auch jedes andere federnde Element, beispielsweise eine Wellenfeder, eine Druckfeder, oder Elastomer-Bauteile. Ein solches Vorspannelement trägt dazu bei, dass Toleranzen sowie eine Längenausdehnung bei eventuell auftretenden Temperaturänderungen ausgeglichen werden. Außerdem wird hierdurch eine konstante und definierte Klemmkraft erzeugt, mit der das Kunststoff-Membranelement fluiddicht geklemmt wird.

In einer Weiterbildung wird vorgeschlagen, dass die beiden Kunststoff-Membranelemente identisch ausgebildet sind. Hierdurch werden nicht nur die Herstellkosten des erfindungsgemäßen Ventils reduziert, sondern das Ventil ist im geöffneten Zustand weitgehend druckausgeglichen, so dass zum Schließen nur sehr geringe Betätigungskräfte erforderlich sind. Insbesondere hierdurch wird die Möglichkeit geschaffen, dass das erfindungsgemäße Ventil nicht nur als Auf-Zu-Ventil sondern auch als Regelventil betrieben werden kann.

In einer Weiterbildung wird vorgeschlagen, dass die in einem geschlossenen Zustand des Ventils hydraulisch in Öffnungsrichtung wirkende Fläche des ersten Kunststoff-Membranelements kleiner ist als die hydraulisch in Schließrichtung wirkende und stromaufwärts vom Dichtabschnitt liegende Fläche des Ventilelements. Dies hat den Vorteil, dass bei geschlossenem Ventil der am Einlass anliegende Fluiddruck die Schließwirkung unterstützt und hierdurch ein zuverlässiges und sicheres Schließen des Ventils gewährleistet wird.

In einer Weiterbildung wird vorgeschlagen, dass mindestens eines der Kunststoff-Membranelemente an mindestens einem Randbereich eine umlaufende einstückig angeformte Materialverdickung aufweist, die einen Klemmabschnitt bildet. Hierdurch kann das Kunststoff-Membranelement auf einfache Art und Weise fluiddicht insbesondere am Gehäuse befestigt werden.

In einer Weiterbildung wird vorgeschlagen, dass das Ventilelement sowohl im einlassseitigen Gehäuseabschnitt als auch im auslassseitigen Gehäuseabschnitt geführt ist. Ein solches Ventilelement schließt und öffnet sehr zuverlässig. Dabei ist es vorteilhaft, wenn gehäuseseitig eine entsprechende Gleitbuchse vorgesehen ist, durch welche für eine besonders reibungsarmen Gleitführung gesorgt wird. Insbesondere dann, wenn das erfindungsgemäße Ventil zur Regelung eingesetzt wird, wird hierdurch auch eine besonders präzise Regelungscharakteristik geschaffen.

In einer Weiterbildung wird vorgeschlagen, dass der Dichtabschnitt ein Sitz-Dichtungselement, insbesondere einen O-Ring umfasst. Grundsätzlich kann das Sitz-Dichtungselement aus unterschiedlichen Materialien gefertigt sein, wobei ein Sitz-Dichtungselement aus einem Elastomer-PTFE-Verbund bevorzugt ist. Durch ein solches Sitz-Dichtungselement wird für eine besonders zuverlässige Abdichtung bei geschlossenem Ventil gesorgt. Grundsätzlich besteht aber die Möglichkeit, dass das Ventilelement unmittelbar, also ohne ein solches separates Sitz-Dichtungselement, mit dem Ventilsitz kooperiert.
In einer Weiterbildung wird vorgeschlagen, dass das Ventilelement vorzugsweise über ein Zwischenelement mit einem Antrieb, insbesondere einem pneumatischen Antrieb oder einem elektrischen Antrieb, gekoppelt ist. Somit kann das gleiche Ventil mit ganz unterschiedlichen Antrieben gekoppelt werden. Dabei haben elektrische Antriebe gegenüber pneumatischen Antrieben den Vorteil, dass sie ohne Rücksichtnahme auf die Längen der Steuerleitungen jederzeit und insbesondere in zeitlicher Hinsicht sehr präzise steuern. Sind mehrere Ventile in einer Prozessanlage verbaut, kann bei einem elektrischen Antrieb beispielsweise sehr gut gewährleistet werden, dass die Ventile wirklich gleichzeitig oder mit einem genau definierten zeitlichen Versatz schalten.

Nachfolgend wird eine Ausführungsform der Erfindung unter Bezugnahme auf die beiliegende Zeichnung erläutert. In der Zeichnung zeigen:

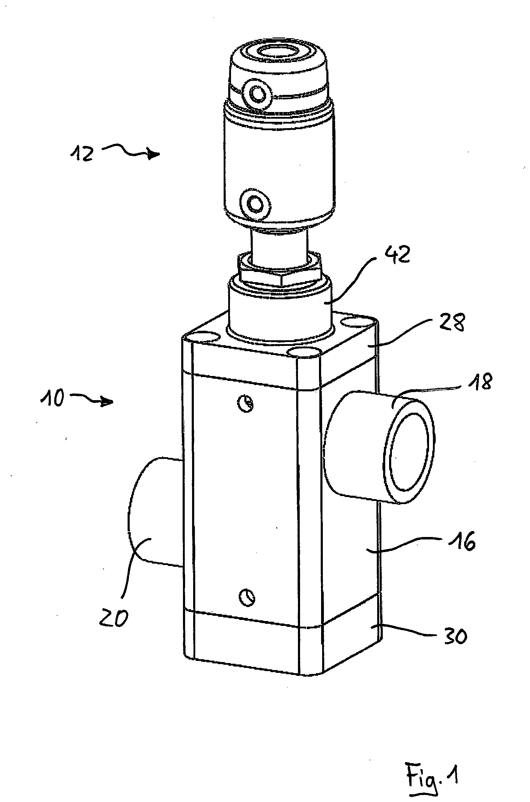

Figur 1 eine perspektivische Darstellung eines Verbunds bestehend aus einem Ventil und einem Antrieb;

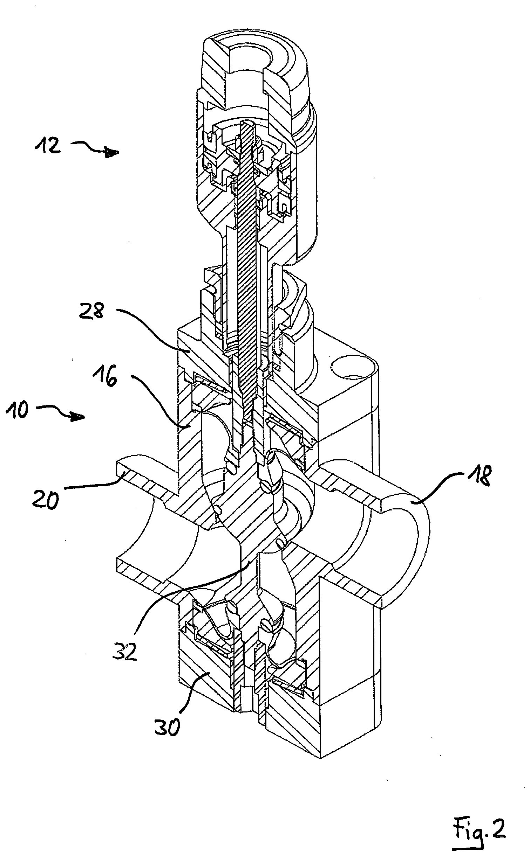

Figur 2 eine perspektivische geschnittene Darstellung des Verbunds von Figur 1;

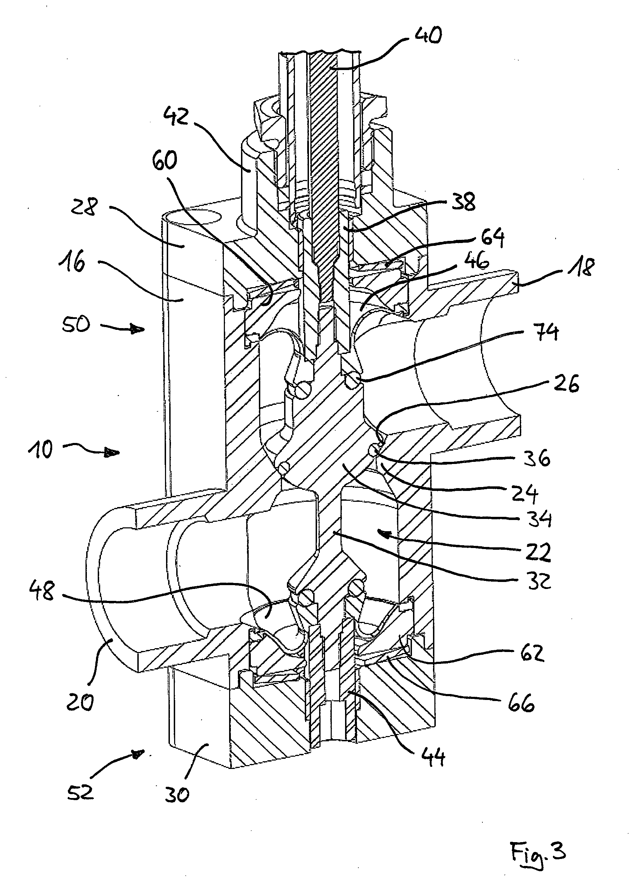

Figur 3 eine perspektivische geschnittene Darstellung des Ventils von Figur 1;

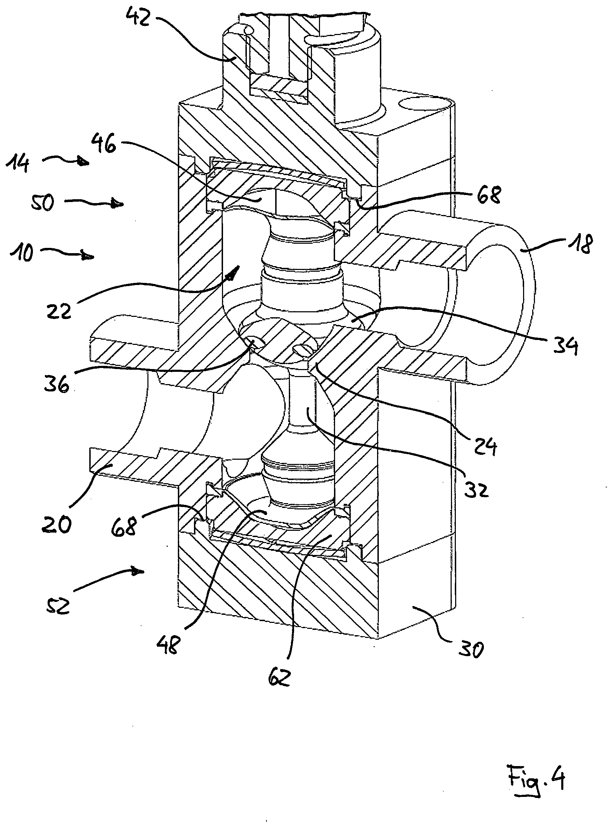

Figur 4 eine perspektivische geschnittene Darstellung des Ventils von Figur 1, wobei die Schnittebene eine andere ist als in Figur 3;

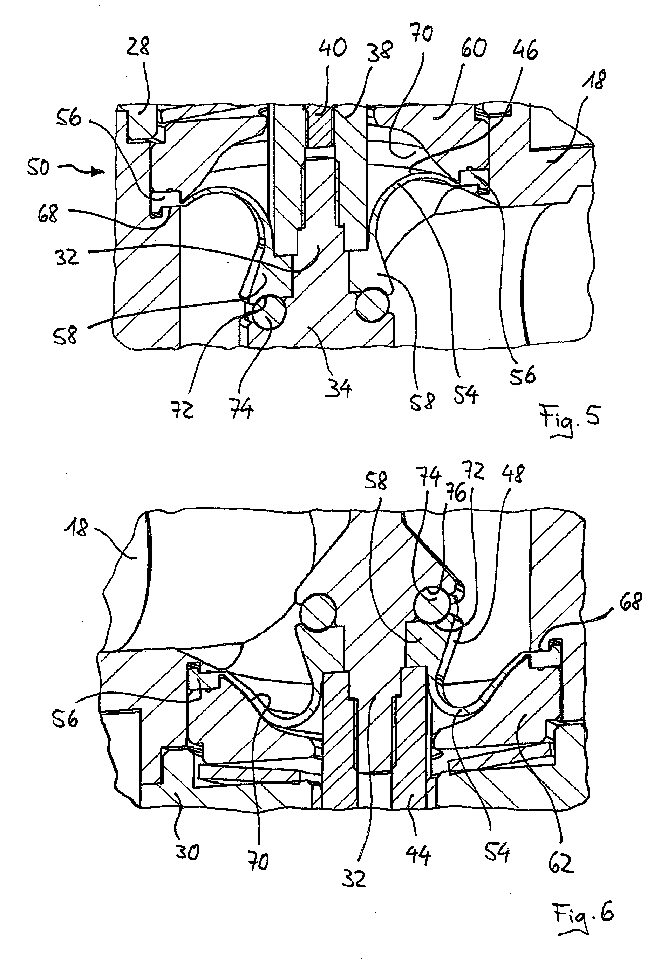

Figur 5 eine Detailansicht aus Figur 3;
Figur 6 eine weitere Detailansicht aus Figur 3;

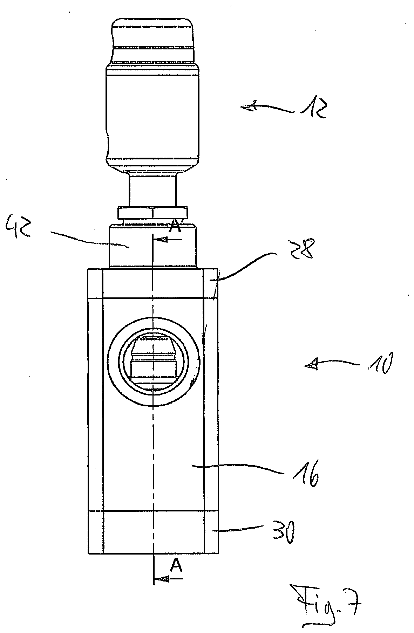

Figur 7 eine Seitenansicht des Verbunds von Figur 1; und

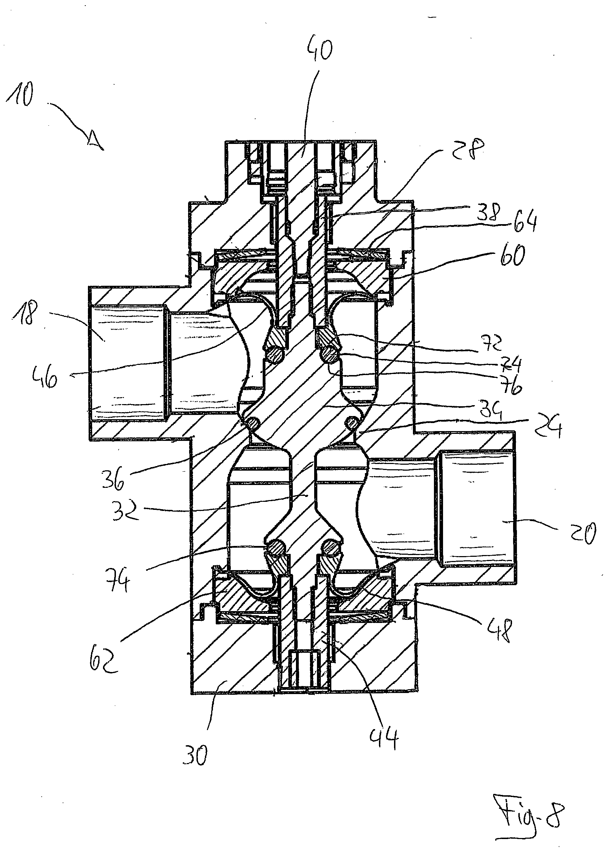

Figur 8 eine Schnittansicht durch das Ventil von Figur 1.

Aus Gründen der Übersichtlichkeit sind nicht in allen Figuren sämtliche Bezugszeichen eingetragen.

In den Figuren tragen ein Ventil das Bezugszeichen 10 und ein Antrieb das Bezugszeichen 12. Das Ventil 10 umfasst ein mehrteiliges Gehäuse 14. Zu dem Gehäuse 14 gehört ein Zentralabschnitt 16, an den in einem in den Figuren oberen Bereich ein rohrförmiger Einlass 18 und in einem in den Figuren unteren Bereich ein rohrförmiger Auslass 20 angeformt sind. Der Einlass 18 und der Auslass 20 sind mit einer in dem Zentralabschnitt 16 ausgebildeten zylindrischen Innenkammer 22 verbunden. In etwa auf ihrer axialen Mitte weist die Innenkammer 22 einen nach radial einwärts ragenden Bund 24 auf, an dem ein Ventilsitz 26 ausgebildet ist.

Zu dem Gehäuse 14 gehören ferner ein oberer Deckel 28 und ein unterer Deckel 30. Sowohl im oberen Deckel 28 als auch im unteren Deckel 30 ist jeweils eine zentrische und zur Innenkammer 22 koaxiale Öffnung (ohne Bezugszeichen) vorhanden. Die beiden Deckel 28, 30 sind vorliegend mit dem Zentralabschnitt 16 verschraubt, sie können aber auch verschweißt oder verklemmt werden. Der Zentralabschnitt 16, der obere Deckel 28 und der untere Deckel 30 sind aus Edelstahl hergestellt.
Zu dem Ventil 10 gehört ferner ein stabförmiges Ventilelement 32 ebenfalls aus Edelstahl. Dieses weist ungefähr in seiner axialen Mitte eine zum Teil kegelförmigen, zum Teil zylindrischen Querschnitt aufweisende Verdickung 34 auf, welche knapp unterhalb ihres größten Durchmessers einen umlaufenden Einstich aufweist, in dem ein Sitz-Dichtungselement in Form eines O-Rings 36 größtenteils aufgenommen ist. Dieser bildet also einen Dichtabschnitt, der bei geschlossenem Ventil 10 am Ventilsitz 26 anliegt.

Ein in den Figuren oberer Endbereich des Ventilelements 32 ist fest mit einem hülsenförmigen Zwischenelement 38 verbunden, welches gleitend in der zentrischen Öffnung im oberen Deckel 28 geführt ist. Das Zwischenelement 38 ist beispielsweise mit dem Ventilelement 32 verschraubt oder verpresst. Das in den Figuren wiederum obere Ende des Zwischenelements 38 ist mit einer Antriebsstange 40 des Antriebs 12 verbunden. Der Antrieb 12 ist dabei in einen flanschartigen rohrförmigen Fortsatz 42 am Deckel 28 eingeschraubt. Auch ein in den Figuren unterer Endbereich des Ventilelements 32 ist mit einer zum Zwischenelement 38 ähnlichen Führungshülse 44 fest verbunden, die in der zentrischen Öffnung im unteren Deckel 30 gleitend geführt ist. Eventuell können zwischen Zwischenelement 38 und dem oberen Deckel 28 und zwischen der Führungshülse 44 und dem unteren Deckel 30 Gleitbuchsen zur reibungsarmen Gleitlagerung vorgesehen sein.

Zur Abdichtung des Ventilelements 32 gegenüber dem Gehäuse 14 dienen zwei Dichtelemente, welche als faltenfreie Kunststoff-Membranelemente 46, 48, die vorliegend aus einem PTFE-Verbund hergestellt sind, ausgebildet sind. Das in den Figuren obere Membranelement 46 dichtet dabei das Ventilelement 32 gegenüber einem einlassseitigen Gehäuseabschnitt 50 ab, und dass in den Figuren untere Membranelement 48 dichtet das Ventilelement 32 gegenüber einem auslassseitigen Gehäuseabschnitt 52 ab. Vorliegend sind die beiden Membranelemente 46 und 48 identisch, jedoch spiegelbildlich verbaut. Sie umfassen einen flexiblen Membranabschnitt 54, einen starren gehäuseseitigen Verbindungsabschnitt 56 und einen starren ventilelementseitigen Verbindungsabschnitt 58.

Der gehäuseseitige Verbindungsabschnitt 56 wird durch eine in einem radial äußeren Randbereich eines Membranelements 46, 48 vorhandene, umlaufende und einstückig an den Membranabschnitt 54 angeformte Materialverdickung gebildet. Der ventilelementseitige Verbindungsabschnitt 58 wird ebenfalls durch eine Materialverdickung gebildet, die allerdings an dem vom Verbindungsabschnitt 56 entgegengesetzten radial inneren Randbereich eines Membranelements 46, 48 angeordnet ist. Sie ist ebenfalls umlaufend und einstückig an den Membranabschnitt 54 angeformt.

Zum Gehäuse 14 gehören auch zwei Stützringe 60 und 62, wobei der in den Figuren obere Stützring 60 dem oberen Membranelement 46 und der in den Figuren untere Stützring 62 dem in den Figuren unteren Membranelement 48 zugeordnet ist. Zwischen dem oberen Stützring 60 und dem oberen Deckel 28 ist eine obere Tellerfeder 64 verspannt, und zwischen dem unteren Stützring 62 und dem unteren Deckel 30 ist eine untere Tellerfeder 66 verspannt. Durch die Tellerfedern 64 und 66 wird ein jeweiliger, radial äußerer Abschnitt (ohne Bezugszeichen) des Stützrings 60 bzw. 62 gegen den jeweiligen gehäuseseitigen Verbindungsabschnitt 56 des entsprechenden Membranelements 46, 48 gepresst, wodurch der jeweilige Verbindungsabschnitt 56 wiederum gegen einen am Zentralabschnitt 16 vorhandenen jeweiligen Klemmabsatz 68 gedrückt wird. Auf diese Weise ist der jeweilige gehäuseseitige Verbindungsabschnitt 56 fluiddicht zwischen dem Stützring 60 bzw. 62 und dem jeweiligen Klemmabsatz 68 verklemmt. Der Verbindungsabschnitt 56 bildet insoweit also einen Klemmabschnitt.

Die beiden Stützringe 60 und 62 weisen eine radial einwärtige und zum jeweiligen Membranelement 46, 48 hin weisende Stützfläche 70 auf, die konkav ausgebildet ist und an der ein Membranabschnitt 54 eines Membranelements 46, 48 zumindest bereichsweise dann in Anlage kommt, wenn sich das Ventilelement 32 in einer zu dem jeweiligen Stützring 60, 62 hin weisenden Endlage befindet.

Der ventilelementseitige Verbindungsabschnitt 58 ist, wie gesagt, ebenfalls als eine Materialverdickung ausgebildet, welche an einer der Verdickung 34 des Ventilelements 32 zugewandten axialen Endfläche eine Ausformung 72 aufweist, welche komplementär ist zu einem Bereich eines O-Dichtrings 74, der wiederum bereichsweise in einer entsprechenden Ausformung 76 der Verdickung 34 aufgenommen ist. Hierdurch wird eine fluiddichte Verbindung eines Membranelements 46, 48 mit dem Ventilelement 32 geschaffen. Da die beiden Membranelemente 46, 48 eine gewisse Steifigkeit aufweisen und die Geometrie am Ventilelement 32 und/oder die Länge des Zentralabschnitts 16 des Gehäuses 14 entsprechend gewählt sind, sind die beiden O-Dichtringe 74 fest einerseits zwischen dem Ventilelement 32 und andererseits den ventilelementseitigen Verbindungsabschnitten 58 der beiden Membranelemente 46, 48 verpresst, wodurch eine sichere fluiddichte Ausführung gewährleistet ist.

Das Ventil 10 arbeitet folgendermaßen: im geschlossenen Zustand befindet sich das Ventilelement 32 in seiner in den Figuren maximal unteren Position, in der der O-Ring 36 am Ventilsitz 26 anliegt. Somit ist die Verbindung zwischen dem Einlass 18 und dem Einlass 20 unterbrochen. Aufgrund der Krümmung des Membranabschnitts 54 des oberen Membranelements 46 ist in diesem Zustand die durch den Fluiddruck in Öffnungsrichtung wirkende Kraft kleiner als die durch den Fluiddruck an der Verdickung 34 des Ventilelements 32 in Schließrichtung wirkende Kraft. Die hydraulisch in Öffnungsrichtung wirkende Fläche des oberen Membranelements 46 ist also kleiner ist als die hydraulisch in Schließrichtung wirkende und stromaufwärts vom Dichtabschnitt 36 liegende Fläche des Ventilelements 32. Das Ventil 10 wird somit zuverlässig im geschlossenen Zustand gehalten, ohne dass der Antrieb 12 hierzu noch einen wesentlichen Beitrag leisten muss.

Zum Öffnen muss der Antrieb 12 die in Schließrichtung wirkende Kraft überwinden. Da die Membranelemente 46, 48 identisch sind, ist nun, im geöffneten Zustand des Ventils 10, in dem der Einlass 18 fluidisch über die Innenkammer 22 mit dem Auslass 20 verbunden ist, das Ventilelement 32 weitgehend druckausgeglichen, so das nun seitens des Antriebs 12 nur noch geringe Kräfte aufzubringen sind. Dies ist insbesondere für eine gefühlvolle und präzise Regelung der Position des Ventilelements 32 hilfreich.

Durch die in jedem Betriebszustand eine kontinuierliche Krümmung aufweisenden Membranelemente 46, 48 wird der Strömungswiderstand des durch das geöffnete Ventil 10 strömenden Fluids vergleichsweise gering gehalten. Aufgrund der glatten Oberflächen der Membranelemente 46, 48 können sich ferner dort keine Stoffreste und Partikel "einnisten", wodurch Verunreinigungen des Prozessfluids vorgebeugt wird.

## Patentansprüche

1. Ventil (10), welches umfasst: ein Gehäuse (14) mit einem Ventilsitz (26); ein in dem Gehäuse (14) geführtes Ventilelement (32), welches einen Dichtabschnitt (36) aufweist, der bei geschlossenem Ventil (10) am Ventilsitz (26) anliegt; einen Einlass (18) und einen Auslass (20), die dann, wenn der Dichtabschnitt (36) am Ventilsitz (26) anliegt, fluidisch voneinander getrennt sind; einen einlassseitigen Gehäuseabschnitt (50) und einen auslassseitigen Gehäuseabschnitt (52); ein erstes Dichtelement (46), welches das Ventilelement (32) gegenüber dem einlassseitigen Gehäuseabschnitt (50) abdichtet; und ein zweites Dichtelement (48), welches das Ventilelement (32) gegenüber dem auslassseitigen Gehäuseabschnitt (52) abdichtet; wobei das erste und das zweite Dichtelement jeweils ein faltenfreies Kunststoff-Membranelement (46, 48) umfassen, wobei das Gehäuse (14) mindestens einen Stützring (60, 62) aufweist, der eine radial einwärtige und zum jeweiligen Kunststoff-Membranelement (46, 48) hin weisende Stützfläche (70) aufweist, an der ein Membranabschnitt (54) eines Kunststoff-Membranelements (46, 48) bereichsweise dann in Anlage kommt, wenn sich das Ventilelement (32) in einer zu dem jeweiligen Stützring (60, 62) hin weisenden Endlage befindet, **dadurch gekennzeichnet, dass** die zum jeweiligen Kunststoff-Membranelement (46, 48) hin weisende Stützfläche konkav ausgebildet ist, dass mindestens eines der Kunststoff-Membranelemente (46, 48) an mindestens einem Randbereich eine umlaufende einstückig angeformte Materialverdickung (58) aufweist, die eine Ausformung (72) aufweist, welche komplementär ist zu einem Bereich eines O-Dichtrings (74), und dass das Ventil (10) eine Vorspanneinrichtung (64, 66) umfasst, welche zwischen dem Stützring (60, 62) und einem ersten Gehäuseabschnitt (28, 30) angeordnet ist und welche eine Klemmkraft erzeugt, durch die ein Klemmabschnitt (56) des zu dem Stützring (60, 62) benachbarten Kunststoff-Membranelements (46, 48) zwischen dem Stützring (60, 62) und einem zweiten Gehäuseabschnitt (68) verklemmt wird.

2. Ventil (10) nach Anspruch 1, **dadurch gekennzeichnet, dass** die beiden Kunststoff-Membranelemente (46, 48) identisch ausgebildet sind.

3. Ventil (10) nach einem der vorhergehenden Ansprüche, **dadurch gekennzeichnet, dass** in einem Schließzustand des Ventils (10) die hydraulisch in Öffnungsrichtung wirkende Fläche des ersten Kunststoff-Membranelements (46) kleiner ist als die hydraulisch in Schließrichtung wirkende und stromaufwärts vom Dichtabschnitt (36) liegende Fläche des Ventilelements (32) .

4. Ventil (10) nach einem der vorhergehenden Ansprüche, **dadurch gekennzeichnet, dass** mindestens eines der Kunststoff-Membranelemente (46, 48) an mindestens einem Randbereich eine umlaufende einstückig angeformte Materialverdickung (56) aufweist, die einen Klemmabschnitt bildet.

5. Ventil (10) nach einem der vorhergehenden Ansprüche, **dadurch gekennzeichnet, dass** das Ventilelement (32) sowohl im einlassseitigen Gehäuseabschnitt (50) als auch im auslassseitigen Gehäuseabschnitt (52) geführt ist.

6. Ventil (10) nach einem der vorhergehenden Ansprüche, **dadurch gekennzeichnet, dass** der Dichtabschnitt ein Sitz-Dichtungselement umfasst.

7. Ventil (10) nach einem der vorhergehenden Ansprüche, **dadurch gekennzeichnet, dass** das Ventilelement (32) vorzugsweise über ein Zwischenelement (38) mit einem Antrieb gekoppelt ist.

## Claims

1. A valve (10) comprising: a housing (14) having a valve seat (26); a valve element (32) which is guided in the housing (14) and has a sealing portion (36) which bears against the valve seat (26) when the valve (10) is closed; an inlet (18) and an outlet (20) which, when the sealing portion (36) bears against the valve seat (26), are fluidically separated from one another; an inlet side housing portion (50) and an outlet side housing portion (52); a first sealing member (46) sealing the valve element (32) from the inlet side housing portion (50); and a second sealing member (48) sealing the valve element (32) from the outlet side housing portion (52); the first and second sealing members each comprising a crease-free plastic membrane member (46, 48), the housing (14) having at least one support ring (60, 62) having a radially inward support surface (70) facing the respective plastic membrane member (46, 48), on which a membrane portion (54) of a plastic membrane element (46, 48) comes into contact regionally when the valve element (32) is in an end position facing the respective support ring (60, 62), **characterized in that** the support surface facing the respective plastic membrane element (46, 48) is concave, **in that** at least one of the plastic membrane elements (46, 48) has at at least one edge region a circumferential integrally formed material thickening (58) which has a formation (72) which is complementary to a region of an O-ring seal (74), and **in that** the valve (10) comprises a prestressing device (64, 66), which is disposed between the support ring (60, 62) and a first housing portion (28, 30) and which generates a clamping force by which a clamping portion (56) of the plastic membrane member (46, 48) adjacent to the support ring (60, 62) is clamped between the support ring (60, 62) and a second housing portion (68).

2. Valve (10) according to claim 1, **characterized in that** the two plastic membrane elements (46, 48) are of identical design.

3. Valve (10) according to one of the preceding claims, **characterized in that**, in a closed state of the valve (10), the surface of the first plastic membrane element (46) acting hydraulically in the opening direction is smaller than the surface of the valve element (32) acting hydraulically in the closing direction and located upstream of the sealing section (36).

4. Valve (10) according to one of the preceding claims, **characterized in that** at least one of the plastic membrane elements (46, 48) has at at least one edge region a circumferential, integrally formed material thickening (56) which forms a clamping section.

5. Valve (10) according to one of the preceding claims, **characterized in that** the valve element (32) is guided both in the inlet-side housing portion (50) and in the outlet-side housing portion (52).

6. Valve (10) according to one of the preceding claims, **characterized in that** the sealing portion comprises a seat-sealing member.

7. Valve (10) according to one of the preceding claims, **characterized in that** the valve element (32) is preferably coupled to a drive via an intermediate element (38).

## Revendications

1. Soupape (10), laquelle comporte: un carter (14) pourvu d'un siège de soupape (26); un élément de soupape (32) qui est guidé dans le carter (14) et qui présente une partie d'étanchéité (36) qui s'applique contre le siège de soupape (26) lorsque la soupape (10) est fermée; une entrée (18) et une sortie (20), qui sont séparées fluidiquement l'une de l'autre lorsque la partie d'étanchéité (36) s'applique contre le siège de soupape (26); une partie de carter côté entrée (50) et une partie de carter côté sortie (52); un premier élément d'étanchéité (46), lequel étanchéifie l'élément de soupape (32) par rapport à la partie de carter côté entrée (50); et un deuxième élément d'étanchéité (48), lequel étanchéifie l'élément de soupape (32) par rapport à la partie de carter côté sortie (52); dans lequel le premier et le deuxième élément d'étanchéité comportent chacun un élément membrane en matière plastique (46, 48) sans pli, dans lequel le carter (14) comprend au moins une bague d'appui (60, 62) qui présente une surface d'appui (70) radialement intérieure et orientée en direction de l'élément membrane en matière plastique (46, 48) respectif, sur laquelle une partie de membrane (54) d'un élément membrane en matière plastique (46, 48) vient en appui par endroits lorsque l'élément de soupape (32) se situe dans une position d'extrémité orientée en direction de la bague d'appui (60, 62) respective, **caractérisée en ce que** la surface d'appui orientée en direction de l'élément membrane en matière plastique (46, 48) respectif est concave, **en ce qu'**au moins un des éléments membrane en matière plastique (46, 48) présente sur au moins une zone marginale un épaississement de matériau (58) périphérique formé d'une seule pièce, qui présente une partie conformée (72), laquelle est complémentaire d'une zone d'un joint torique (74), et **en ce que** la soupape (10) comporte un dispositif de précontrainte (64, 66), lequel est agencé entre la bague d'appui (60, 62) et une première partie de carter (28, 30) et lequel génère une force de serrage par l'intermédiaire de laquelle une partie de serrage (56) de l'élément membrane en matière plastique (46, 48) voisin de la bague d'appui (60, 62) est coincée entre la bague d'appui (60, 62) et une deuxième partie de carter (68).

2. Soupape (10) selon la revendication 1, **caractérisée en ce que** les deux éléments membrane en matière plastique (46, 48) sont identiques.

3. Soupape (10) selon l'une quelconque des revendications précédentes, **caractérisée en ce que**, dans un état de fermeture de la soupape (10), la surface du premier élément membrane en matière plastique (46), laquelle agit de manière hydraulique dans la direction d'ouverture, est plus petite que la surface de l'élément de soupape (32) agissant de manière hydraulique dans la direction de fermeture et située en amont de la partie d'étanchéité (36) .

4. Soupape (10) selon l'une quelconque des revendications précédentes, **caractérisée en ce qu'**au moins un des éléments membrane en matière plastique (46, 48) présente sur au moins une zone marginale un épaississement de matériau (56) périphérique formé d'une seule pièce, qui forme une partie de serrage.

5. Soupape (10) selon l'une quelconque des revendications précédentes, **caractérisée en ce que** l'élément de soupape (32) est guidé aussi bien dans la partie de carter côté entrée (50) que dans la partie de carter côté sortie (52) .

6. Soupape (10) selon l'une quelconque des revendications précédentes, **caractérisée en ce que** la partie d'étanchéité comporte un élément d'étanchéité de siège.

7. Soupape (10) selon l'une quelconque des revendications précédentes, **caractérisée en ce que** l'élément de soupape (32) est accouplé à un entraînement de préférence au moyen d'un élément intermédiaire (38).
